Europäisches Patentamt

(19) European Patent Office

Office européen des brevets

(11) Numéro de publication: **0 009 441**
**B1**

(12) **FASCICULE DE BREVET EUROPEEN**

(45) Date de publication du fascicule du brevet: **02.06.82**

(51) Int. Cl.³: **F 16 K 25/02, F 16 K 49/00**

(21) Numéro de dépôt: **79400639.5**

(22) Date de dépôt: **13.09.79**

(54) **Vanne de vidange et procédé d'utilisation d'une vanne de vidange.**

(30) Priorité: **21.09.78 FR 7827036**

(43) Date de publication de la demande:
**02.04.80 Bulletin 80/7**

(45) Mention de la délivrance du brevet:
**02.06.82 Bulletin 82/22**

(84) Etats contractants désignés:
**BE CH DE GB IT NL**

(56) Documents cités:
**DE - A - 2 643 273**
**FR - A - 679 464**
**FR - A - 1 545 386**
**US - A - 3 133 554**
**US - A - 3 228 412**

(73) Titulaire: **SOCIETE ARTESIENNE DE VINYLE**
**62, rue Jeanne d'Arc**
**F-75646 Paris Cédex 13 (FR)**

(72) Inventeur: **Leconte, Alain**
**1, rue Guynemer**
**F-76530 Grand Couronne (FR)**
Inventeur: **Bailleul, Serge**
**8, rue Gilbert Grenay**
**F-61160 Bully les Mines (FR)**

(74) Mandataire: **Bolesse, Edith et al,**
**Cdf Chimie - Service Propriété Industrielle Tour**
**Aurore - Cédex 5**
**F-92080 Paris La Defense (FR)**

Courier Press, Leamington Spa, England.

Vanne de vidange et procédé d'utilisation d'une vanne de vidange

L'invention concerne une vanne de vidange et un procédé utilisant une telle vanne pour faciliter la vidange de cuves, réacteurs ou réservoirs. L'invention concerne également des cuves, réacteurs ou réservoirs munis de telles vannes et s'applique plus particulièrement à de telles enceintes contenant des produits qui, sous l'effet de variations de température, sont suceptibles de former des dépôts ou encroûtements qui obstruent les vannes de vidange.

Les cuves de stockage ou les réacteurs sont généralement constitués par des enceintes, cylindriques ou cylindro-coniques, comportant une arrivée du produit à stocker ou des réactifs à traiter et une sortie du produit stocké ou du produit réactionnel. Un système de vidange à organe mobile fonctionnant par tout ou rien, appelé vanne de fond de cuve permet ou empêche la sortie du produit.

Pour des réservoirs contenant des produits visqueux on a décrit en particulier dans le US—A 3133554 une vanne comportant des séries de canaux qui débouchent dans un interstice entre le corps de vanne et la partie mobile de la vanne; cet interstice ne se formant que lorsque la vanne est ouverte: un tel dispositif présente l'inconvénient de ne fonctionner qu'en discontinu.

Lorsque le produit ou les réactifs contenus dans ces enceintes sont sensibles à la température il est généralement prévu un système de régulation thermique. Ainsi par exemple, dans le cas des cuves de stockage des solutions concentrées de nitrate d'ammonium, il est recommandé de maintenir ces solutions à une température relativement élevée, voisine de 140°C pour empêcher la cristallisation du nitrate qui se produit lorsque la température s'abaisse vers 121°C. Malgré ces précautions, on observe cependant souvent la formation de ces cristaux au niveau des vannes de vidange, ce qui provoque le bouchage des vannes en question et nécessite leur démontage, nettoyage et remise en place.

Dans le cas de réacteures, tels que ceux utilisés pour la préparation de polymères tels que polyéthylène, polystyrène, chlorure de polyvinyle par exemple, un chemisage extérieur des réacteurs permet de maintenir la température à la valeur optimale pour la polymérisation; cependant, un tel chemisage n'est pas possible sur le système de vidange et la polymérisation qui s'effectue à ce niveau conduit à des masses dures qui bouchent rapidement les vannes de fond de cuve. Il est alors nécessaire d'arrêter les réacteurs pour assurer le nettoyage des vannes, ces arrêts, étant effectués après une dizaine d'opérations de polymérisation. Il apparaît clairement que pour optimiser le fonctionnement de ces cuves ou réacteurs, il est souhaitable de diminuer autant que possible les risques de bouchage des vannes, ce qui permet d'espacer les périodes d'arrêt et d'augmenter le nombre d'opérations que l'on peut effectuer entre deux nettoyages de vannes.

La présente invention concerne une vanne de vidange et un procédé utilisant une telle vanne pour faciliter la vidange de cuves, réacteurs ou réservoirs, ce procédé permettant d'augmenter sensiblement le nombre d'opérations de vidange que l'on peut effectuer sans opération de démontage.

Les vannes de fond de cuve selon l'invention comportant un corps de vanne et un organe mobile pour la vidange d'une enceinte contenant des produits susceptibles de former des masses dures par suite des variations de température, selon laquelle le corps de vanne comprend des moyens pour l'introduction d'un fluide sous une pression supérieure à celle régnant dans l'enceinte, vannes caractérisées par le fait que l'introduction du fluide est continu et que le fluide crée un écran thermique au-dessus de l'organe mobile.

Les vannes de fond de cuve utilisables pour la mise en oeuvre de l'invention sont des vannes comportant un organe mobile coopérant avec une paroi ou élément fixe appelé corps de vanne, pour assurer une fermeture étanche des enceintes à la base desquelles elles sont fixées, ou permettre, le soutirage des produits qui y sont contenus. Des exemples de ces vannes sont les vannes à boisseau ou les vannes à clapet. Dans les vannes à ~~boisseau~~, une rotation de 90° de l'organe mobile autour d'un axe horizontal permet de dégager une fente ou lumière qui permet la sortie du produit contenu dans l'enceinte au-dessus de la vanne. Dans. les vannes dites à clapet, un mouvement transversal permet de déplacer l'organe mobile, ce qui libère également le passage pour la sortie du produit contenu dans l'enceinte.

Les moyens pour l'introduction d'un fluide prévus sur le corps de vanne sont constitués par au moins deux ouvertures percées à travers cette paroi fixe au-dessus de l'organe mobile. Selon un mode de réalisation, on prévoit ainsi deux ouvertures cylindriques diamétralement opposées. Selon un autre mode de réalisation, on dispose trois ouvertures espacées de 120° ou un plus grand nombre d'ouvertures régulièrement espacées, ou encore une fente sur la totalité du corps de la vanne. Selon un mode de réalisation préféré, ce ouvertures sont disposées tangentiellement par rapport au corps de la vanne.

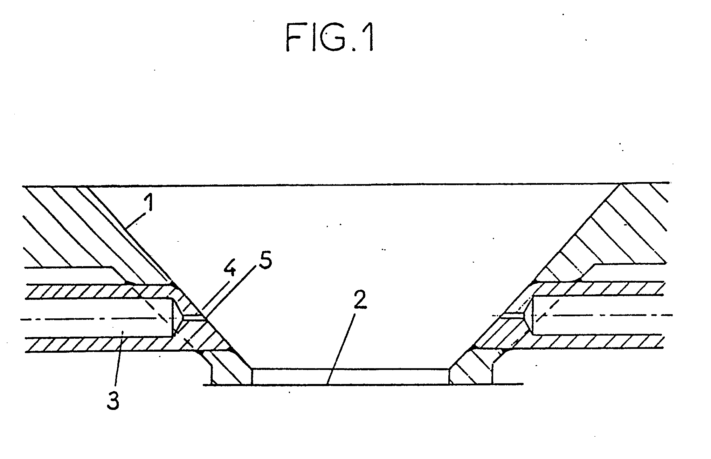

La figure 1 annexée représente une coupe d'un mode de réalisation de l'invention, avec quatre ouvertures également réparties sur le pourtour du corps de vanne. Sur cette figure, on a représenté le corps de vanne 1 avec l'organe mobile 2 en position fermée. Un trou 3 est percé dans la paroi fixe du corps 1, ce premier trou se prolongeant par un second trou 4 de diamètre plus faible, calculé en fonction du débit de fluide désiré. Ce trou 4 débouche en 5 sur la paroi fixe du corps 1, l'ouverture étant biaisée pour éviter toute protubérance à l'intérieur de l'espace libre au-dessus de l'organe mobile.

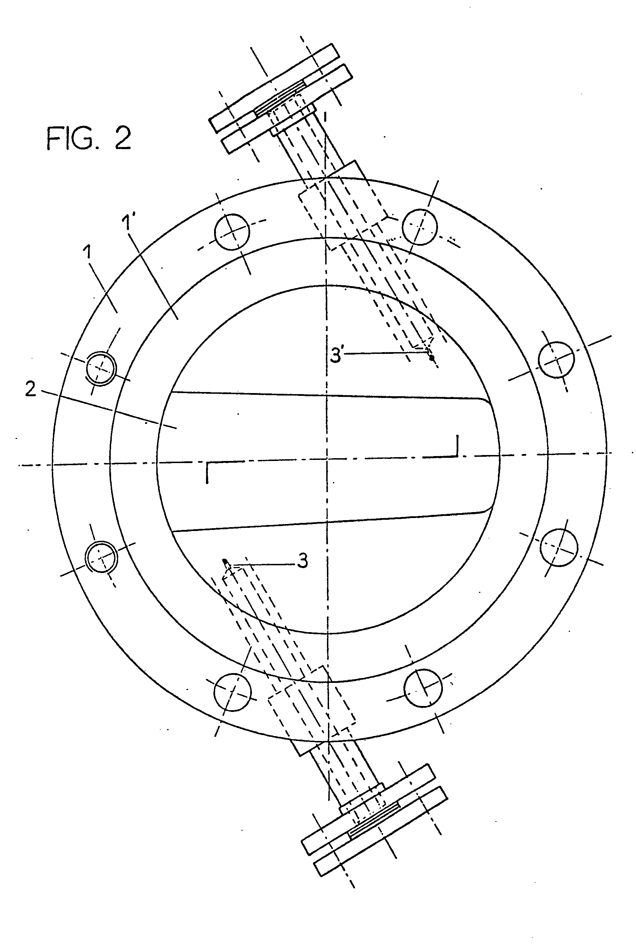

Selon un mode de réalisation préféré, tel que représenté sur la figure 2 annexée, on prévoit deux ouvertures diamétralement opposées disposées de manière que le fluide ait une direction tangentielle par rapport à la paroi de la vanne. Sur cette figure, qui représente schématiquement une vanne vue d'en haut, on a représenté la collerette extérieure du corps de vanne 1 et 1' avec les boulons de serrage et l'organe mobile 2. Les ouvertures 4 et 4' pour l'introduction du fluide sont telles que le fluide ait une direction tangentielle dans un plan horizontal par rapport à la circonférence de la vanne dans ce plan. Ce système permet de donner au fluide un mouvement tourbillonnaire qui assure un meilleur recouvrement de l'organe mobile.

Le procédé selon l'invention pour empêcher le bouchage des vannes de vidange à organe mobile à la base d'enceintes contenant des produits susceptibles de former des masses dures par suite de variations de température est caractérisé par le fait qu'on crée à l'aide d'un fluide un écran thermique au-dessus de l'organe mobile pendant toute la durée de fonctionnement et de vidange de l'enceinte.

Dans les types d'enceintes décrits ci-dessus, un système de régulation thermique est mis en place sur le corps de l'enceinte, mais dans la pratique industrielle, il ne peut généralement être prévu au niveau de la zone de vidange. Dans ces conditions, la zone de vidange est un endroit où se forment rapidement des quantités indésirables de masses dures des produits contenus dans l'enceinte de réaction ou stockage, ce qui conduit à des bouchages.

Il a été trouvé que l'on pouvait empêcher cette formation de masses dures en créant un écran thermique fluide au-dessus de l'organe mobile des vannes de fond de cuve pendant la durée de fonctionnement de l'enceinte et pendant la vidange. La nature du fluide n'est pas critique pour autant qu'il s'agisse d'un composé inerte par rapport au contenu de l'enceinte. On peut ainsi, dans certains cas, utiliser un fluide gazeux tel que l'air ou la vapeur d'eau par exemple. Dans d'autres cas, il faut utiliser un liquide tel que l'eau par exemple. La température de ce fluide est aisément choisie par l'homme de l'art en fonction des conditions thermiques qui règnent normalement dans l'enceinte et de celles qui règnent normalement au niveau de la zone de vidange. Ainsi par exemple lorsqu'on stocke des produits chauds qui sont susceptibles de se présenter sous forme de masses dures ou compactes par suite d'un abaissement de température, il est recommandé de créer un écran thermique chaud, par exemple un courant d'air chaud, pour éviter un trop brusque refroidissement au niveau de la vanne de fond de cuve. Dans d'autres cas au contraire, l'élévation de température due à l'absence de chemisage à circulation d'eau froide au niveau de la zone de vidange peut provoquer une réaction indésirable, par exemple une polymérisation incontrôlable. Il est alors avantageux de créer un écran thermique froid.

Le fluide destiné à créer l'écran thermique doit bien entendu être introduit sous une pression supérieure à celle régnant dans l'enceinte, afin d'éviter tout retour du fluide vers l'extérieur. Il faut cependant noter qu'il n'est pas nécessaire d'exercer une très forte pression sur le fluide et une différence de pression de l'ordre de 100 g $(9,81 . 10^3$ Pa) suffit généralement à garantir l'introduction du fluide.

Dans le cas particulier où l'enceinte est un réacteur dans lequel on effectue la polymérisation du chlorure de vinyle en suspension aqueuse, telle que décrite par exemple dans W. MAYO SMITH, MANUFACTURE OF PLASTICS, I 312—321, RHEINHOLD PUB. Co. (1964), l'écran thermique créé au-dessus de l'organe mobile est obtenu en introduisant de l'eau sous une pression supérieure à celle du réacteur, le débit $Q$ de cette eau et la différence $\Delta t$ entre la température de polymérisation et la température d'introduction de l'eau étant tels que le rapport $Q/\Delta t$ soit compris entre 0,5 et 10 litres par heure et par degré centigrade.

Exemple

Dans cet exemple, on a appliqué l'invention à une vanne à boisseau utilisée comme vanne de fond de cuve dans un réacteur de polymérisation en suspension aqueuse de chlorure de vinyle. La pression de polymérisation était de 10 bars (1 M Pa) et la température de polymérisation de 60°C.

La vanne était équipée d'un dispositif d'introduction d'eau tel que représenté sur la figure 2. On a ainsi introduit par chaque ouverture du dispositif, pendant toute la durée de fonctionnement et de vidange du réacteur, 90 l/h d'eau propre, de préférence déminéralisée, à la température de 15°C et sous une pression de 17 bars. Le rapport $Q/\Delta t$ était égal à 0,4 l/h/°C. Cette eau forme, au-dessus de l'organe mobile de la vanne, un rideau qui empêche la formation de masses dures de produits trop fortement polymérisés. Elle est ensuite éliminée par séchage avec l'eau normalement contenue dans la suspension. Grâce à ce dispositif, on a pu faire passer de 15 à 100 le nombre d'opérations possibles sans obligation de nettoyage.

**Revendications**

1. Vanne de fond comportant un corps de vanne (1) et un organe mobile (2) pour la vidange d'une enceinte contenant des produits susceptibles de former des masses dures par suite des variations de température selon laquelle le corps de vanne comprend des moyens pour l'introduction d'un fluide sous une pression supérieure à celle régnant dans l'enceinte caractérisée par le fait que l'introduction du fluide est continu et que le fluide crée un écran thermique au-dessus de l'organe mobile.

2. Vanne selon la revendication 1 caractérisée par le fait que les moyens pour l'introduction du fluide en continu sont constitués par au moins deux ouvertures percées à travers le corps de vanne au-dessus de l'organe mobile, de préférence régulièrement espacées sur le corps de vanne.

3. Vanne selon la revendication 1 ou 2 caractérisée par le fait que les moyens pour l'introduction du fluide en continu sont constitués par deux ouvertures (4) et (4') diamétralement opposées percées à travers le corps de vanne (1) au-dessus de l'organe mobile (2) de manière que le fluide ait une direction tangentielle par rapport au corps de vanne.

4. Procédé pour empêcher le bouchage des vannes de vidange à organe mobile à la base d'enceintes caractérisé par le fait qu'on crée à l'aide d'un fluide un écran thermique au-dessus de l'organe mobile pendant toute la durée du fonctionnement et de vidange de l'enceinte.

5. Procédé selon la revendication 4 dans lequel l'enceinte est un réacteur de polymérisation du chlorure de vinyle en suspension aqueuse, caractérisé en ce que l'écran thermique créé au-dessus de l'organe mobile est obtenu en introduisant de l'eau sous une pression supérieure à celle du réacteur, le débit Q de cette eau est la différence Δt entre la température de polymérisation et la température d'introduction de l'eau étant tels que le rapport Q/Δt soit compris entre 0,5 et 10 litres par heure et par degré centigrade.

## Claims

1. Base valve comprising a valve body (1) and a movable element (2) for emptying a chamber containing products which may form hard masses as a result of temperature variations, in accordance with which the valve body comprises means for the introduction of a fluid under a pressure greater than that present in the chamber, characterised in that the introduction of the fluid is continuous and in that the fluid creates a heat screen above the movable element.

2. A valve as claimed in claim 1, characterised in that the means for the continuous introduction of the fluid are constituted by at least two apertures drilled through the body of the valve above the movable element and preferably uniformly spaced over the valve body.

3. A valve as claimed in claim 1 or 2, characterised in that the means for the continuous introduction of the fluid are constituted by two apertures (4) and (4') which are diametrically opposite and drilled through the valve body (1) above the movable element (2) such that the fluid has a tangential direction with respect to the valve body.

4. A method for preventing the blocking of emptying valves with a movable element at the base of chambers, characterised in that a heat screen is established by this fluid above the movable element during the entire duration of operation and emptying of the chamber.

5. A method as claimed in claim 4, in which the chamber is a polymerisation chamber for vinyl chloride in aqueous suspension, characterised in that the heat screen established above the movable element is obtained by introduction of water under a pressure greater than that present in the chamber, the flow rate Q of this water and the temperature difference between the polymerisation temperature and the introduction temperature of water have a value such that Q/Δt ranges between 0.5 and 10 liters per hour and per degree centigrade.

## Patentansprüche

1. Bodenventil mit einem Ventilkörper (1) und einem beweglichen Organ (2) zur Entleerung eines Behälters, der Produkte enthält, die infolge von Temperaturänderungen harte Massen bilden können, wobei der Ventilkörper eine Einrichtung zur Einführung eines Fluids mit einem Druck enthält, der höher als der im Behälter herrschende Druck ist, dadurch gekennzeichnet, dass die Einführung des Fluids kontinuierlich erfolgt und dass das Fluid über dem beweglichen Organ eine Wärmeabschirmung erzeugt.

2. Ventil nach Anspruch 1, dadurch gekennzeichnet, dass die Einrichtung zur ständigen Einführung des Fluids aus wenigstens zwei Öffnungen besteht, die oberhalb des beweglichen Organs durch den Ventilkörper gebohrt und am Bentilkörper vorzugsweise in regelmässigen Abständen angeordnet sind.

3. Ventil nach Anspruch 1 oder 2, dadurch gekennzeichnet, dass die Einrichtung zur ständigen Einführung des Fluids aus zwei diametral gegenüberliegenden Öffnungen (4, 4') besteht, die über dem beweglichen Organ (2) durch den Ventilkörper (1) derart gebohrt sind, dass das Fluid gegenüber dem Ventilkörper eine tangentiale Richtung hat.

4. Verfahren zur Verhinderung der Verstopfung von Entleerungsventilen mit beweglichem Organ an der Basis von Behältern, dadurch gekennzeichnet, dass während der gesamten Betriebs- und Entleerungsdauer des Behälters mittels eines Fluids über dem beweglichen Organ eine Wärmeabschirmung erzeugt wird.

5. Verfahren nach Anspruch 4, bei dem der Behälter ein Reaktor zur Polymerisierung von in wässriger Suspension befindlichem Polyvinylchlorid ist, dadurch gekennzeichnet, dass die über dem beweglichen Organ erzeugte Wärmeabschirmung durch Einführen von Wasser erzeugt wird, dessen Druck über demjenigen des Reaktor liegt, wobei die Durchsatzmenge Q dieses Wassers und die Differenz $\Delta t$ zwischen der Polymerisierungstemperatur und der Einführungstemperatur des Wassers von der Art sind, dass das Verhältnis $Q/\Delta t$ zwischen 0,5 und 10 Liter je Stunde und Grad Celsius liegt.

# FIG.1

FIG. 2